# EUROPÄISCHE PATENTSCHRIFT

(11) **EP 1 249 088 B1**
(45) Veröffentlichungstag und Bekanntmachung des Hinweises auf die Patenterteilung: **12.11.2003**
(21) Anmeldenummer: 01911372.9
(22) Anmeldetag: 19.01.2001
(51) Int. Cl.: H04B 10/24, G02B 6/42, H01S 5/022

(54) **ELEKTROOPTISCHES DATENÜBERTRAGUNGSMODUL**
ELECTROOPTICAL DATA-TRANSMISSION MODULE
MODULE DE TRANSMISSION DE DONNEES ELECTRO-OPTIQUE

(30) Priorität: 21.01.2000 DE 10002521
(43) Veröffentlichungstag der Anmeldung: 16.10.2002
(73) Patentinhaber: Infineon Technologies AG, 81669 München (DE)
(72) Erfinder: HURT, Hans, 93049 Regensburg (DE); PANZER, Klaus, 93049 Regensburg (DE); MÜLLER, Gustav, 94486 Osterhofen (DE); SCHÖNFELD, Olaf, 81241 München (DE)
(74) Vertreter: Lange, Thomas, Dr.
(86) Internationale Anmeldenummer: DE0100240
(87) Internationale Veröffentlichungsnummer: WO01054321

(56) Entgegenhaltungen:
- WO-A-99/07023
- DE-A- 19 755 734
- US-A- 5 040 868
- US-A- 5 907 151
- PATENT ABSTRACTS OF JAPAN vol. 1998, no. 06, 30. April 1998 (1998-04-30) -& JP 10 041540 A (SHICHIZUN DENSHI:KK), 13. Februar 1998 (1998-02-13)

## Beschreibung

Die Erfindung betrifft ein elektrooptisches Datenübertragungsmodul mit einem Laserlicht-Emitterchip und einem Licht-Empfängerchip.

Ein solches Datenübertragungsmodul ist beispielsweise aus dem U.S.-Patent 5,864,468 bekannt.

Eine Schwierigkeit bei dem Entwurf derartiger Module besteht darin, daß sie einerseits eine möglichst hohe Datenübertragungsrate (500 Mbps und mehr) bewältigen und andererseits - insbesondere auch aufgrund ihres vermehrten Einsatzes in der Konsumgüterelektronik - möglichst klein sein sollen. Diese beiden Forderungen sind nur schwer zu vereinen. Denn erstens benötigen solche hochratigen Module einen robusten Aufbau, weshalb bekannte Module mit einem Gehäuse ausgeführt sind, welches relativ viel Platz beansprucht. Ein weiterer Grund, der der erwünschten Miniaturisierung entgegensteht, besteht darin, daß die gegenwärtig in solchen Modulen verwendeten kantenemittierenden Halbleiterlaser einen relativ hohen Strombedarf aufweisen. Daher muß zur Vermeidung elektronischen Übersprechens zwischen den Sender-Bauelementen und der Empfängerschaltung ein gewisser Mindestabstand eingehalten werden. Ein dritter Grund für den hohen Platzbedarf konventioneller Module besteht darin, daß die hohe Stromaufnahme des Laserlicht-Emitterchips auch zur Folge hat, daß die herkömmlichen elektrooptischen Datenübertragungsmodule spezielle Treiberschaltungen benötigen. Diese sind in der Regel innerhalb des Modulgehäuses angeordnet und erhöhen dessen Baugröße weiter.

Der Erfindung liegt die Aufgabe zugrunde, ein elektrooptisches Datenübertragungsmodul mit einem Laserlicht-Emitterchip und einem Licht-Empfängerchip anzugeben, das für die optische Datenübertragung bei Datenraten im Bereich von 500 Mbps (Multimedia) geeignet ist und wenig Platz beansprucht.

Die Aufgabenstellung wird durch die Merkmale des Anspruchs 1 gelöst.

Demnach besteht ein wesentlicher Aspekt der Erfindung darin, daß als Sender-Bauelement ein oberflächenemittierender Laserlicht-Emitterchip verwendet wird. Oberflächenemittierende Laserlicht-Emitterchips, sogenannte VCSELs (vertical cavity surface emitting lasers), weisen eine deutlich niedrigere Stromaufnahme als vergleichbare kantenemittierende Laserchips auf. Durch die niedrige Stromaufnahme wird die Problematik des elektronischen Übersprechens deutlich verringert, d.h. der Licht-Empfängerchip sowie die diesem nachgeschalteten Schaltkreise (Vorverstärker, Nachverstärker) können näher an den Sendeschaltkreis herangebracht werden.

Eine weitere für die Zielsetzung der Erfindung wesentliche Maßnahme besteht darin, daß sowohl der oberflächenemittierende Laserlicht-Emitterchip als auch der lichtsensitive Licht-Empfängerchip in eigenen SMT-(surface mounting technology: Oberflächenmontagetechnik-)Gehäusen untergebracht sind. Dies ermöglicht einen kompakten, modularen und mechanisch stabilen Aufbau des elektrooptischen Datenübertragungsmoduls.

Beide genannten Maßnahmen (oberflächenemittierender Laserlicht-Emitterchip und Einzel-SMT-Gehäuse für Emitterchip und Empfängerchip) gestatten es, ein elektrooptisches Datenübertragungsmodul mit einer Datenübertragungsrate von etwa 500 Mbps und mehr und einem hohen Miniaturisierungsgrad zu schaffen.

Gemäß einer besonders bevorzugten Ausführungsform umfaßt das elektrooptische Datenübertragungsmodul ein Haltemittel, das die beiden SMT-Gehäuse mechanisch verbindet. Bei dem Haltemittel kann es sich beispielsweise um eine die beiden SMT-Gehäuse umgebende Modulgehäuseumfassung und/oder um eine zwischen den beiden SMT-Gehäusen angeordnete Fixiereinrichtung handeln. In beiden Fällen erlaubt das Haltemittel eine Justage des ersten SMT-Gehäuses gegenüber dem zweiten SMT-Gehäuse, d.h. eine Justage der Sende- und Empfangslichtstrahlengänge.

Eine weitere bevorzugte Ausgestaltung der Erfindung kennzeichnet sich dadurch, daß das Datenübertragungsmodul ferner ein Lichtleiter-Verlängerungselement umfaßt, das in einem dritten SMT-Gehäuse untergebracht ist. Dadurch wird die Modularität des Gesamtaufbaus weiter gefördert.

Vorzugsweise sind die SMT-Gehäuse quader- oder würfelförmig gestaltet. Ein robustes Datenübertragungsmodul gemäß der Erfindung läßt sich dann durch einfaches Zusammensetzen der Gehäusewürfel/-quader erzeugen.

Bei einer Anordnung bestehend aus einer Platine und einem darauf angebrachten elektrooptischen Datenübertragungsmodul kennzeichnet sich eine vorteilhafte Ausführungsform dadurch, daß eine Treiberschaltung für den oberflächenemittierenden Laserlicht-Emitterchip außerhalb des Datenübertragungsmoduls auf der Platine angebracht ist. Die Auslagerung der Treiberschaltung aus dem elektrooptischen Datenübertragungsmodul heraus ermöglicht eine Verkleinerung der Modulabmessungen sowohl aufgrund der dadurch bewirkten Platzeinsparung als auch aufgrund der Verminderung des elektronischen Übersprechens innerhalb des Moduls.

Eine weitere unter dem Gesichtspunkt der Miniaturisierung günstige Anordnung von Datenübertragungsmodul und Schaltungsperipherie kennzeichnet sich dadurch, daß eine Vorverstärkerschaltung für den lichtsensitiven Licht-Empfängerchip innerhalb des zweiten SMT-Gehäuses angeordnet ist, und daß eine Nachverstärkerschaltung für den lichtsensitiven Licht-Empfängerchip außerhalb des Datenübertragungsmoduls auf der Platine angebracht ist. Die Platzeinsparung wird durch die Auslagerung der Nachverstärkerschaltung herbeigeführt.

Weitere bevorzugte Ausgestaltungen der Erfindung sind in den Unteransprüchen angegeben.

Die Erfindung wird nachfolgend anhand eines Ausführungsbeispiels und Varianten desselben unter Bezugnahme auf die Zeichnung näher erläutert; in dieser zeigt:
- Fig. 1: eine schematische Darstellung eines Datenübertragungsmoduls nach dem Stand der Technik in Draufsicht;
- Fig. 2: eine schematische Darstellung eines erfindungsgemäßen Datenübertragungsmoduls in Draufsicht;
- Fig. 3: eine perspektivische Darstellung eines in dem erfindungsgemäßen Datenübertragungsmodul verwendeten SMT-Gehäuses;
- Fig. 4A: eine schematische Längsschnittdarstellung des SMT-Gehäuses des Laserlicht-Emitterchips;
- Fig. 4B: eine schematische Querschnittdarstellung entlang der Linie I-I in Fig. 4A; und
- Fig. 5: eine schematische Frontansicht eines Datenübertragungsmoduls mit aufgeschnittener Modulgehäuseumfassung.

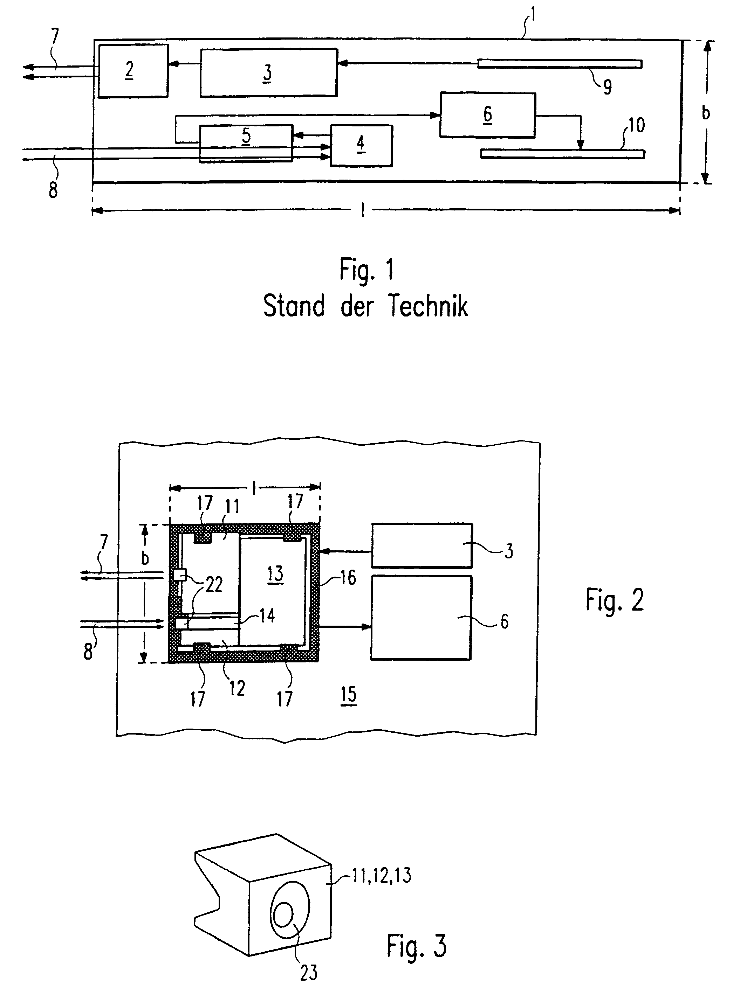

Nach Fig. 1 umfaßt ein bekanntes elektrooptisches Datenübertragungsmodul, das zum Empfangen und Senden von Datenraten im Bereich von 500 Mbps verwendet wird, ein Gehäuse l, in welchem ein Halbleiterlaser 2 mit vorgeschaltetem Treiberschaltkreis 3 sowie eine Photodiode 4 mit einem nachgeschalteten Vorverstärker 5 und einem Nachverstärker 6 angeordnet sind. Das von dem Laser 2, einem Kantenemitter, emittierte Laserlicht ist mit dem Bezugszeichen 7 bezeichnet, einfallendes, auf die Photodiode 4 auftreffendes Laserlicht ist mit dem Bezugszeichen 8 versehen. Zur elektrischen Anbindung des Datenübertragungsmoduls an eine elektrische Peripherie dienen Anschlußelemente 9 und 10.

Aufgrund der bereits genannten Schwierigkeiten (mechanische Stabilität, elektronisches Übersprechen) konnten die Abmessungen derartiger Module bisher nicht auf Größen unter etwa 1 cm Breite b und 5 cm Länge l verkleinert werden.

Fig. 2 zeigt in schematischer Weise eine Anordnung aus drei SMT-Submodulen, die zu einem erfindungsgemäßen Datenübertragungsmodul zusammengesetzt sind, in Draufsicht. Vergleichbare Teile wie in Fig. 1 sind mit denselben Bezugszeichen bezeichnet.

Das elektrooptische Datenübertragungsmodul umfaßt drei SMT-Gehäuse 11, 12, 13, welche jeweils einen rechteckigen Grundriß aufweisen und in der dargestellten Weise an Seitenwänden im wesentlichen spaltfrei aneinander anliegen.

Das erste SMT-Gehäuse 11 enthält einen Laserlicht-Emitterchip in Form eines VCSEL (nicht dargestellt}, das zweite SMT-Gehäuse 13 enthält einen lichtsensitiven Licht-Empfängerchip und einen Vorverstärker (nicht dargestellt) und das dritte SMT-Gehäuse 12 enthält eine optische Verlängerung 14.

Die drei SMT-Gehäuse 11, 12, 13 sind auf einer ausschnittsweise dargestellten Platine 15 montiert. Die SMT-Gehäuse 11, 12, 13 werden von einer Steckaufnahme 16 umfaßt. Durch Führungsvorsprünge 17, die an dem Innenumfang der Steckaufnahme 16 angebracht sind und in komplementär ausgebildete Gleitnuten (nicht dargestellt) an den außenliegenden Seitenwänden der SMT-Gehäuse 11, 12, 13 eingreifen, wird eine Justage der SMT-Gehäuse 11, 12, 13 zueinander erreicht.

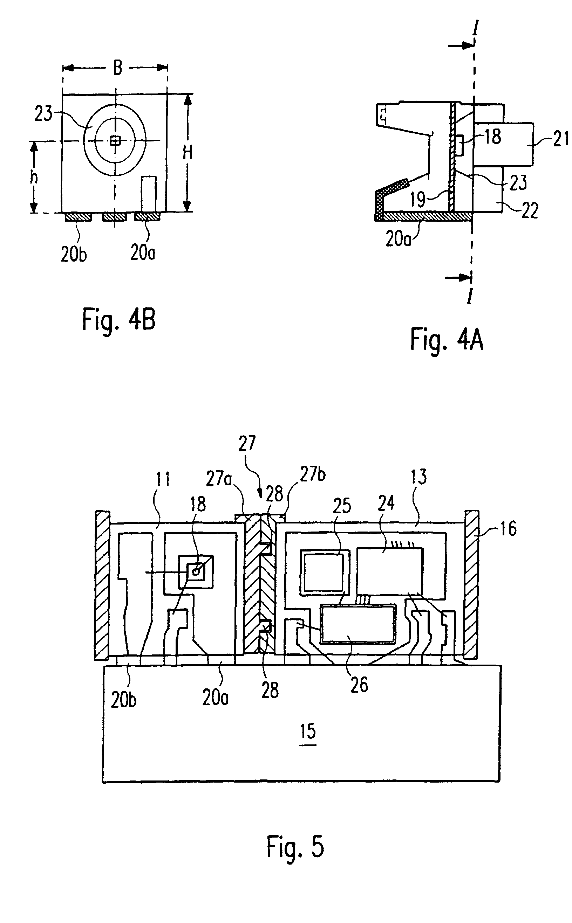

Eine andere Möglichkeit der gegenseitigen Justage der SMT-Gehäuse 11, 12, 13 besteht darin, daß die Gehäuse 11, 12, 13 mittels Fixiereinrichtungen (siehe Fig. 5) an ihren zueinander hinweisenden Seitenwänden zusammengefügt sind. Beide Maßnahmen (Steckaufnahme 16 und Fixierung an zueinander hinweisenden Seitenwänden) können auch gleichzeitig realisiert sein.

Die Lichtein- bzw. auskopplung erfolgt über Faseranschlüsse 22, die durch die Frontseite der Steckaufnahme 16 hindurchtreten.

Außerhalb der Steckaufnahme 16 befindet sich die Treiberschaltung 3 und der Nachverstärker 6. Die Treiberschaltung 3 kann aufgrund des niedrigen Strombedarfs (etwa 10 mA) des erfindungsgemäßen oberflächenemittierenden Laserlicht-Emitterchips ggf. vollständig entfallen.

Das in Fig. 2 dargestellte erfindungsgemäße Datenübertragungsmodul weist eine Breite b = 5 mm und eine Länge l = 7 mm auf.

Zur Herstellung der in Fig. 2 gezeigten Anordnung werden zunächst die SMT-Gehäuse 11, 12, 13 zusammengefügt und dann auf der Platine 15 montiert. Die Steckaufnahme 16 wird nachfolgend über die drei SMT-Gehäuse 11, 12, 13 aufgeschoben.

Fig. 3 zeigt eine perspektivische Darstellung eines SMT-Gehäuses, wie es für die SMT-Gehäuse 11, 12, 13 eingesetzt werden kann. Das Gehäuse besteht aus Kunststoff und ist mit ebenen und im rechten Winkel zueinander angeordneten Seitenwänden gebildet. In einer vorderen Seitenwand ist eine Einbauvertiefung 23 ausgebildet, in welcher das jeweilige vom Gehäuse umgebene Funktionselement angeordnet ist. Durch die im wesentlichen einheitliche Formgebung der Gehäuse 11, 12, 13 wird die Modularität des gesamten Konzepts unterstützt.

Fig. 4A zeigt eine Längsschnittdarstellung durch das in Fig. 3 dargestellte Gehäuse. Vorliegend handelt es sich um das SMT-Gehäuse 11 des Lichtsenders. Der VCSEL 18 ist auf einem Metallträger 19 angebracht, welcher zur Unterseite des SMT-Gehäuses 11 hingeführt ist und dort eine erste SMT-Kontaktfläche 20a ausbildet.

Das von dem VCSEL 18 emittierte Laserlicht tritt in eine optische Faser 21 ein, welche in dem stirnseitig an dem SMT-Gehäuse 11 angeordneten Faseranschluß 22 gehaltert ist.

Das in Fig. 4A dargestellte Gehäuse 11 ist in der Fig. 4B im Querschnitt entlang der Linie I-I gezeigt. Die Höhe H des SMT-Gehäuses 11 beträgt in dem hier dargestellten Beispiel 3,8 mm, die Breite B des Gehäuses 11 beträgt etwa 3,2 mm und die Höhe h der optischen Achse (d.h. des VCSELs 18) über dem Gehäuseboden beträgt etwa 2,8 mm.

Eine zweite SMT-Kontaktfläche 20b bildet den Gegenkontakt zu der ersten SMT-Kontaktfläche 20a.

Fig. 5 zeigt die Frontansicht einer Variante (ohne drittes SMT-Gehäuse 12) des in Fig. 2 dargestellten erfindungsgemäßen elektrooptischen Datenübertragungsmoduls, wobei die vordere Seitenwand der Steckaufnahme 16 aus Darstellungsgründen nicht eingezeichnet ist. Ferner sind die SMT-Gehäuse 11 und 13 transparent dargestellt, um den internen Aufbau der entsprechenden Bauelemente deutlich zu machen.

Das in dem ersten SMT-Gehäuse 11 untergebrachte Sendemodul entspricht bis auf die außermittige Anordnung des VCSELs 18 im wesentlichen dem in den Fig. 4A und 4B gezeigten Sendemodul. Die elektrische Kontaktierung des VCSELs 18 erfolgt wiederum über die beiden SMT-Kontaktflächen 20a und 20b.

Das in dem zweiten SMT-Gehäuse 13 untergebrachte Empfangsmodul umfaßt neben einer Photodiode 25 noch einen Vorverstärker 26. In optionaler Weise können gegebenenfalls auch noch andere integrierte Schaltkreise 24 vorhanden sein.

Zwischen den SMT-Gehäusen 11, 13 befindet sich eine Steckeinrichtung 27, die die beiden Gehäuse 11, 13 zusammenhält. Die Steckeinrichtung 27 besteht aus einem ersten Steckelement 27a mit Steckvorsprüngen 28 und einem zweiten Steckelement 27b. mit zu den Steckvorsprüngen komplementär ausgebildeten Stecköffnungen. Die Steckelemente 27a, 27b liegen im zusammengesteckten Zustand lagestabil aneinander an. Sie können auch integral mit den SMT-Gehäusen 11, 13 ausgebildet sein.

## Patentansprüche

1. Elektrooptisches Datenübertragungsmodul, mit
- einem in einem ersten SMT-Gehäuse (11) untergebrachten oberflächenemittierenden Laserlicht-Emitterchip (18), und
- einem in einem zweiten SMT-Gehäuse (13) untergebrachten lichtsensitiven Licht-Empfängerchip (25).

2. Elektrooptisches Datenübertragungsmodul nach Anspruch 1,
**dadurch gekennzeichnet,**
- **daß** das Datenübertragungsmodul ferner ein die beiden SMT-Gehäuse (11, 13) mechanisch verbindendes Haltemittel (16; 27) umfaßt.

3. Elektrooptisches Datenübertragungsmodul nach Anspruch 2,
**dadurch gekennzeichnet,**
- **daß** das Haltemittel eine die beiden SMT-Gehäuse (11, 13) umgebende Modulgehäuseumfassung (16) ist.

4. Elektrooptisches Datenübertragungsmodul nach Anspruch 3,
**dadurch gekennzeichnet,**
- **daß** das Haltemittel eine zwischen den beiden SMT-Gehäusen (11, 13) angeordnete Fixiereinrichtung (27) ist.

5. Elektrooptisches Datenübertragungsmodul nach einem der vorhergehenden Ansprüche,
**dadurch gekennzeichnet,**
- **daß** das Datenübertragungsmodul ferner ein Lichtleiter-Verlängerungselement (14) umfaßt, das in einem dritten SMT-Gehäuse (12) untergebracht ist.

6. Elektrooptisches Datenübertragungsmodul nach einem der vorhergehenden Ansprüche,
**dadurch gekennzeichnet,**
- **daß** die SMT-Gehäuse (11, 12, 13) quader- oder würfelförmig gestaltet sind.

7. Elektrooptisches Datenübertragungsmodul nach einem der vorhergehenden Ansprüche,
**dadurch gekennzeichnet,**
- **daß** die SMT-Gehäuse (11, 12, 13) über ihre Seitenwänden aneinander abgestützt sind.

8. Elektrooptisches Datenübertragungsmodul nach einem der vorhergehenden Ansprüche,
**dadurch gekennzeichnet,**
- **daß** die seitlichen Abmessungen (b, l) des Datenübertragungsmoduls kleiner als 1cm sind.

9. Anordnung aus einer Platine und einem darauf angebrachten elektrooptischen Datenübertragungsmodul nach einem der vorhergehenden Ansprüche,
**dadurch gekennzeichnet,**
- **daß** eine Treiberschaltung (3) für den oberflächenemittierenden Laserlicht-Emitterchip (18) außerhalb des Datenübertragungsmoduls auf der Platine (15) angebracht ist.

10. Anordnung nach Anspruch 9,
**dadurch gekennzeichnet,**
- **daß** eine Vorverstärkerschaltung (26) für den lichtsensitiven Licht-Empfängerchip (25) innerhalb des zweiten SMT-Gehäuses (13) angeordnet ist, und
- **daß** eine Nachverstärkerschaltung (6) für den Lichtsensitiven Licht-Empfängerchip (25) außerhalb des Datenübertragungsmoduls auf der Platine (15) angebracht ist.

## Claims

1. Electro-optical data transmission module, having
- a surface-emitting laser light emitter chip (18) which is accommodated in a first SMT housing (11), and
- a light-sensitive light receiver chip (25) which is accommodated in a second SMT housing (13).

2. Electro-optical data transmission module according to Claim 1, **characterized**
- **in that** the data transmission module also comprises a securing means (16; 27) which mechanically connects the two SMT housings (11, 13).

3. Electro-optical data transmission module according to Claim 2, **characterized**
- **in that** the securing means is a module housing surround (16) which surrounds the two SMT housings (11, 13).

4. Electro-optical data transmission module according to Claim 3, **characterized**
- **in that** the securing means is an attachment device (27) arranged between the two SMT housings (11, 13).

5. Electro-optical data transmission module according to one of the preceding claims, **characterized**
- **in that** the data transmission module also comprises a light guide extension element (14) which is accommodated in a third SMT housing (12).

6. Electro-optical data transmission module according to one of the preceding claims, **characterized**
- **in that** the SMT housings (11, 12, 13) are parallelepiped-shaped or cuboid.

7. Electro-optical data transmission module according to one of the preceding claims, **characterized**
- **in that** the SMT housings (11, 12, 13) are supported on one another by means of their side walls.

8. Electro-optical data transmission module according to one of the preceding claims, **characterized**
- **in that** the lateral dimensions (b, l) of the data transmission module are less than 1 cm.

9. Arrangement composed of a circuit board and an electro-optical data transmission module mounted thereon, according to one of the preceding claims, **characterized**
- **in that** a driver circuit (3) for the surface-emitting laser light emitter chip (18) is mounted outside the data transmission module on the circuit board (15).

10. Arrangement according to Claim 9, **characterized**
- **in that** a preamplifier circuit (26) for the light-sensitive light receiver chip (25) is arranged inside the second SMT housing (13), and
- **in that** a post-amplifier circuit (6) for the light-sensitive light receiver chip (25) is mounted outside the data transmission module on the circuit board (15).

## Revendications

1. Module électro-optique de transmission de données comprenant
- une puce (18) formant émetteur de lumière laser, logée dans un premier boîtier (11) SMT et émettant en surface et
- une puce (25) formant récepteur de lumière, logée dans un deuxième boîtier (13) SMT et sensible à la lumière.

2. Module électro-optique de transmission de données suivant la revendication 1, **caractérisé**
- **en ce que** le module de transmission de données comprend en outre un moyen (16 ; 27) de maintien assemblant mécaniquement les deux boîtiers (11, 13) SMT.

3. Module électro-optique de transmission de données suivant la revendication 2, **caractérisé**
- **en ce que** le moyen de maintien est une enveloppe (16) de boîtier de module entourant les deux boîtiers (11, 13) SMT.

4. Module électro-optique de transmission de données suivant la revendication 3, **caractérisé**
- **en ce que** le moyen de maintien est un dispositif (27) d'immobilisation interposé entre les deux boîtiers (11, 13) SMT.

5. Module électro-optique de transmission de données suivant l'une des revendications précédentes, **caractérisé**
- **en ce que** le module de transmission de données comprend en outre un élément (14) de prolongement à fibre optique qui est logé dans un troisième boîtier (12) SMT.

6. Module électro-optique de transmission de données suivant l'une des revendications précédentes, **caractérisé**
- **en ce que** les boîtiers (11, 12, 13) SMT sont parallélépipédiques ou cubiques.

7. Module électro-optique de transmission de données suivant l'une des revendications précédentes, **caractérisé**
- **en ce que** les boîtiers (11, 12, 13) SMT s'appuient les uns sur les autres par leurs parois latérales.

8. Module électro-optique de transmission de données suivant l'une des revendications précédentes, **caractérisé**
- **en ce que** les dimensions (b, l) latérales du module de transmission de données sont plus petites que 1 cm.

9. Dispositif constitué d'une platine et d'un module électro-optique de transmission de données qui y est monté suivant l'une des revendications précédentes, **caractérisé**
- **en ce qu'**il est prévu un circuit (3) d'attaque de la puce (18) formant émetteur de lumière laser émettant en surface sur la platine (15) à l'extérieur du module de transmission de données.

10. Dispositif suivant la revendication 9, **caractérisé**
- **en ce qu'**il est placé dans le deuxième boîtier (13) SMT un circuit (26) formant préamplificateur pour la puce (25) formant récepteur de lumière qui est sensible à la lumière, et
- **en ce qu'**il est monté sur la platine (15) à l'extérieur du module de transmission de données un circuit (6) formant post-amplificateur pour la puce (25) formant récepteur de lumière sensible à la lumière.
